# EUROPÄISCHE PATENTANMELDUNG

(11) **EP 4 451 003 A1**
(43) Veröffentlichungstag der Anmeldung: **23.10.2024**
(21) Anmeldenummer: 23168177.6
(22) Anmeldetag: 17.04.2023
(51) Int. Cl.: G01S 7/48, G01S 7/497

(54) **SENSORANORDNUNG UND VERFAHREN ZUM BETRIEB EINER SENSORANORDNUNG**

(71) Anmelder: Leuze electronic GmbH + Co. KG, 73277 Owen/Teck (DE)
(72) Erfinder: Wendel, Dr. Simon, 73230 Kirchheim unter Teck (DE); Neder, Dr., Verena, 72458 Albstadt (DE)
(74) Vertreter: Ruckh, Rainer Gerhard

(57) **Zusammenfassung**

Die Erfindung betrifft eine Sensoranordnung (100) mit einem Flächendistanzsensor (1), mit einem Lichtstrahlen (3) emittierenden Sender (4) und einem Lichtstrahlen (3) empfangenden Empfänger (5). Die Lichtstrahlen (3) sind periodisch in einer Abtastebene geführt. Mit einer Auswerteeinheit werden abhängig von Empfangssignalen des Empfängers (5) Distanzen von Objekten (7) bestimmt. Wenigstens ein Ausrichtelement (16) ist vorhanden, dass geneigt zur Abtastebene angeordnet ist, so dass es in seiner Höhenrichtung über die Abtastebene hervor steht. Das Ausrichtelement (16) weist ein Kontrastmuster auf, welches sich über die Höhe des Ausrichtelements (16) in eindeutiger Weise ändert. In der Auswerteeinheit wird anhand der Empfangssignale des Empfängers (5) die Distanz des Ausrichtelements (16) und der Amplitudenverlauf der Empfangssignale bei der Abtastung des Kontrastmusters mit den Lichtstrahlen (3) als Maß für die Orientierung der Abtastebene ausgewertet.

## Beschreibung

Die Erfindung betrifft eine Sensoranordnung und ein Verfahren zum Betrieb einer Sensoranordnung.

Derartige Sensoranordnungen umfassen einen Flächendistanzsensor mit dem eine Objektüberwachung durchgeführt wird.

Der Flächendistanzsensor umfasst typischerweise einen nach einem Impuls-Laufzeit-Verfahren arbeitenden Distanzsensor. Hierzu weist der Flächendistanzsensor einen Lichtstrahlen emittierenden Sender sowie einen Empfänger zum Empfang der von einem Objekt zurückreflektierten Lichtstrahlen auf.

Dabei werden die Lichtstrahlen des Senders mittels einer Ablenkeinheit abgelenkt, so dass diese periodisch innerhalb eines flächigen Überwachungsbereichs geführt sind und so eine Abtastebene abtasten.

Der Flächendistanzsensor kann an einer stationären Maschine oder an einem Fahrzeug, wie zum Beispiel einem fahrerlosen Transportsystem sein um dort einen Gefahrenbereich zu überwachen. Insbesondere kann der Sensor als Sicherheitssensor ausgebildet sein, der für den Einsatz im Bereich der Sicherheitstechnik, insbesondere dem Personenschutz eingesetzt wird.

Vor Aufnahme des Arbeitsbetriebs muss der Flächendistanzsensor justiert und ausgerichtet werden, dass die von den Lichtstrahlen des Flächendistanzsensors abgetastete Abtastebene in einer vorgegebenen Solllage ausgerichtet ist. Typischerweise wird ein Flächendistanzsensor an einer Maschine oder einem Fahrzeug so ausgerichtet, dass die Abtastebene in einer horizontalen Ebene verläuft und damit parallel zum Boden einer Halle oder dergleichen ausgerichtet ist, auf dem die Maschine steht oder das Fahrzeug fährt.

Zur Ausrichtung des Flächendistanzsensors ist es bekannt, aktive Ausrichteinheiten einzusetzen. Aktiv bedeutet, dass die Ausrichteinheit mehrere aktive Bauelemente aufweist, die die Lichtstrahlen empfangen, worauf entsprechende Anzeigemittel aktiviert werden.

Ein Beispiel hierfür ist eine Säule mit einer Linearanordnung von Photodioden, denen Leuchtdioden als Anzeigemittel zugeordnet sind. Die so ausgebildete Ausrichteinheit wird so aufgestellt, dass die Längsachse der Säule in vertikaler Richtung verläuft. Je nach Ausrichtung des Flächendistanzsensors treffen dessen Lichtstrahlen auf eine bestimmte Photodiode, was mit den Anzeigemitteln visualisiert wird. Ein Benutzer kann so die aktuelle Ausrichtung des Flächendistanzsensors kontrollieren.

Nachteilig hierbei ist zum einen, dass die Ausrichteinheit mit ihrer Vielzahl an aktiven optischen und elektronischen Bauteilen konstruktiv aufwändig und teuer ist.

Zudem ist durch die diskrete Anordnung der Photodioden die Auflösung bei der Erfassung der Lichtstrahlen begrenzt, so dass die Genauigkeit der Ausrichtung des Flächendistanzsensors entsprechend limitiert ist.

Der Erfindung liegt die Aufgabe zugrunde, mit möglichst geringem Konstruktions- und Kostenaufwand eine exakte Justage eines Flächendistanzsensors zu ermöglichen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem Flächendistanzsensor, mit einem Lichtstrahlen emittierenden Sender und einem Lichtstrahlen empfangenden Empfänger. Die Lichtstrahlen sind periodisch in einer Abtastebene geführt. Mit einer Auswerteeinheit werden abhängig von Empfangssignalen des Empfängers Distanzen von Objekten bestimmt. Wenigstens ein Ausrichtelement ist vorhanden, das geneigt zur Abtastebene angeordnet ist, so dass es in seiner Höhenrichtung über die Abtastebene hervorsteht. Das Ausrichtelement weist ein Kontrastmuster auf, welches sich über die Höhe des Ausrichtelements in eindeutiger Weise ändert. In der Auswerteeinheit wird anhand der Empfangssignale des Empfängers die Distanz des Ausrichtelements und der Amplituden- bzw. Signalstärkeverlauf der Empfangssignale bei der Abtastung des Kontrastmusters mit den Lichtstrahlen als Maß für die Orientierung der Abtastebene ausgewertet.

Die Erfindung betrifft auch ein entsprechendes Verfahren.

Bei der erfindungsgemäßen Sensoranordnung ist dem Flächendistanzsensor wenigstens ein Ausrichtelement zu dessen Justage zugeordnet. Das Ausrichtelement bildet ein passives Element, d.h. es weist keine aktiven optischen Bauelemente oder Elektronikkomponenten auf. Das Ausrichtelement kann damit einfach und kostengünstig hergestellt werden. Das Ausrichtelement kann ein einzelnes Objekt sein, das beispielsweise auf den Boden gestellt wird. In einer Ausgestaltung kann das Ausrichtelement alternativ fest als flache, dünne Oberfläche oder Folie auf einem anderen Objekt oder einer Wand angebracht werden. Es ist dadurch leicht und flexibel integrierbar.

Das Ausrichtelement weist ein Kontrastmuster auf, das eine in Höhenrichtung des Ausrichtelements eindeutig ortsabhängige Struktur aufweist. Das Ausrichtelement wird mit den Lichtstrahlen des Flächendistanzsensors abgetastet, wodurch allein anhand der Messwerte des Flächendistanzsensors ein Maß für die Ausrichtung des Flächendistanzsensors und seiner Abtastebene erhalten wird.

Dabei wird mit dem Flächendistanzsensor einerseits die Distanz zum Ausrichtelement bestimmt. Zudem wird das Kontrastmuster des Ausrichtelements erfasst, indem bei der Abtastung das Ausrichtelement und dessen Kontrastmuster der Amplitudenverlauf der Empfangssignale bestimmt und in der Auswerteeinheit ausgewertet wird.

Da das Kontrastmuster in Höhenrichtung des Ausrichtelements eine eindeutige Variation aufweist, wird für die Abtastung des Kontrastmusters mit den Lichtstrahlen in unterschiedlichen Höhenlagen immer ein anderer Amplitudenverlauf erhalten. Durch Hinzunahme der ermittelten Distanz des Ausrichtelements kann somit anhand des ermittelten Amplitudenverlaufs in der Auswerteeinheit genau festgestellt werden, in welcher Höhenlage die Lichtstrahlen auf das Kontrastmuster des Ausrichtelements treffen, d.h. es wird dadurch ein eindeutiges Maß für die Lage der Abtastebene und damit für die aktuelle Ausrichtung des Flächendistanzsensors erhalten.

Als Referenzpunkt für die Abtastebene wird die Höhe der Position des Strahlaustritts am Flächendistanzsensor gemessen, wie es auch beim Stand der Technik bei aktiven Ausrichthilfen üblich ist. Die Bestimmung dieses Referenzpunkts ist aus der Konstruktion bzw. Anbringung des Sensors in der Regel bekannt oder leicht messbar. Für eine zum Boden parallele Ausrichtung der Scanebene entspricht die Sollhöhe der Abtastebene auf dem Ausrichtelement dabei der Austrittshöhe am Flächendistanzsensor.

Im einfachsten Fall weist die Sensoranordnung nur ein Ausrichtelement auf.

Dann werden durch die Erfassung des Ausrichtelements Verkippungen der Abtastebene in Höhenrichtung der Ausrichtelemente festgestellt.

Gemäß einer vorteilhaften Weiterbildung sind mehrere Ausrichtelemente vorhanden, die in Abtastrichtung der Lichtstrahlen in Abstand zueinander angeordnet sind.

Dann werden in der Auswerteeinheit die bei der Abtastung der Ausrichtelemente generierten Empfangssignale ausgewertet.

In diesem Fall werden durch die Erfassung der Ausrichtelemente Verkippungen der Abtastebene in Höhenrichtung der Ausrichtelemente und diesbezüglich einer von den Ausrichtelementen aufgespannten Ebene festgestellt.

Besonders vorteilhaft spannen die Ausrichtelemente eine horizontale Sollebene auf.

Dann ist es zweckmäßig, dass die Ausrichtelemente senkrecht zur horizontalen Sollebene orientiert sind.

Mit dieser Konfiguration lässt sich die Abtastebene besonders gut auf eine horizontale Sollebene ausrichten.

Gemäß einer vorteilhaften Ausführungsform ist eine Anzeigeeinheit vorhanden, die dem Flächendistanzsensor zugeordnet ist. Mit der Anzeigeeinheit wird die Ausrichtung der Abtastebene relativ zu dem oder den Ausrichtelementen angezeigt.

Mit der Anzeigeeinheit wird die aktuelle Ausrichtung, die durch Abtastung des oder der Ausrichtelemente ermittelt wurde, angezeigt. Vorteilhaft wird auch die Abweichung der aktuellen Ausrichtung des Flächendistanzsensors bezüglich einer Solllage angezeigt.

Dabei können insbesondere mittels der Anzeigeeinheit Verkippungen der Flächendistanzsensoren bezüglich einer Solllage anzeigt werden. Außerdem können Informationen oder Anweisungen angezeigt werden, wie bzw. in welche Richtung ein Benutzer die Ausrichtung des Flächendistanzsensors verkippen muss, um eine Solllage zu erreichen. Ebenso kann das Erreichen der gewünschten Solllage innerhalb einer gewählten Toleranz angezeigt werden.

An der Anzeigeeinheit können alphanummerische Werte ausgegeben werden. Besonders vorteilhaft ist die Anzeigeeinheit als graphische Anzeige ausgebildet.

Die Anzeigeeinheit kann eine separate Einheit bilden und beispielsweise in einem PC, Laptop, Tablet oder Smartphone integriert sein, wobei die separate Einheit über eine Datenverbindung mit den Flächendistanzsensoren verbunden ist.

Alternativ kann die Anzeigeeinheit auch in dem Flächendistanzsensor integriert sein.

Besonders vorteilhaft ist das oder jedes Ausrichtelement in der Auswerteeinheit anhand dessen Kontrastmusters identifizierbar.

Das Kontrastmuster weist dann eine eindeutige Struktur auf, die das Ausrichtelement von anderen zu detektierenden Objekten unterscheidet. Damit kann das Ausrichtelement während des Messbetriebs des optischen Sensors oder Flächendistanzsensors ohne Zusatzmaßnahmen identifiziert werden.

Gemäß einer vorteilhaften Ausgestaltung weist das Kontrastmuster des oder jedes Ausrichtelements retroreflektierende Elemente auf einem diffus reflektierenden Hintergrund auf.

Zweckmäßig ist ein dunkler Hintergrund vorgesehen.

Die hochreflektierenden retroreflektierenden Elemente können sicher von dem schwach reflektierenden Hintergrund unterschieden werden, da Empfangssignale, die von den retroreflektierenden Elementen stammen, viel größere Amplituden aufweisen als Empfangssignale, die vom Hintergrund stammen.

Gemäß einer geometrisch vorteilhaften Ausgestaltung weist das Kontrastmuster zwei sich über die gesamte Höhe der Ausrichtelemente erstreckende retroreflektierende Streifen auf, die in einem Neigungswinkel zueinander verlaufen.

Durch die Neigung der beiden retroreflektierenden Streifen zueinander ergibt sich in jeder Höhenlage des Ausrichtelements ein anderes lokales Muster, das bei einer Abtastung mit den Lichtstrahlen erfasst wird. Somit liefert der Amplitudenverlauf der Empfangssignale zusammen mit dem ermittelten Distanzwert eine eindeutige Aussage darüber, in welcher Höhenlage das Kontrastmuster abgetastet wurde.

Besonders vorteilhaft ist dabei ein retroreflektierender Streifen an einem seitlichen Rand des Ausrichtelements angeordnet.

Der retroreflektierende Streifen liefert somit eine Referenzlinie, die den Anfang bzw. das Ende des Kontrastmusters und des Ausrichtelements markiert, so dass dessen Lage bestimmbar ist.

Zweckmäßig sind die retroreflektierenden Streifen rechteckförmig.

Weiter zweckmäßig bestehen die retroreflektierenden Elemente aus retroreflektierenden Folien.

Die Folien können einfach auf dem Hintergrund des Ausrichtelements festgeklebt werden.

Eine weitere Ausgestaltung sieht eine Folie vor, die in dem entsprechenden höhenabhängigen Muster auf eine beliebige im Raum befindliche senkrechte ebene Fläche (z.B. Wand, Einrichtung) angebracht werden kann. Ein Hintergrund des Ausrichtelements ist dann gegebenenfalls nicht mehr notwendig, da die Folie das Kontrastmuster auf einem beliebigen vorhandenen Hintergrund bilden kann. Eine vordefinierte Breite bzw. Begrenzung der ebenen Fläche, auf die das Ausrichtelement aufgebracht wird, ist ebenso nicht notwendig, da der retroreflektierende Streifen den Anfang und/oder das Ende der aufgeklebten integrierten Ausrichthilfe markiert.

Der Flächendistanzsensor kann vorteilhaft als Sicherheitssensor ausgebildet sein, der im Bereich der Sicherheitstechnik, insbesondere im Bereich des Personenschutzes eingesetzt werden kann. Beispielsweise kann ein solcher Sicherheitssensor zur Gefahrenbereichsüberwachung an gefahrbringenden Anlagen eingesetzt werden. Der Sicherheitssensor weist hierzu einen fehlersicheren Aufbau auf. Dies kann zum Beispiel durch eine redundante Auswerteeinheit realisiert werden. Insbesondere kann eine zweikanalige Auswerteeinheit mit zwei sich gegenseitig zyklisch überprüfenden Rechnereinheiten vorgesehen sein. Weiterhin können fehlersichere Ausgangsstrukturen zur fehlersicheren Ausgabe von Objektfeststellungssignalen vorgesehen sein. Diese können in Form von zweikanaligen Ausgängen gebildet sein.

Insbesondere kann mit dem als Sicherheitssensor ausgebildeten Flächendistanzsensor eine Schutzfeldüberwachung durchgeführt werden. In diesem Fall wird in der Auswerteeinheit abhängig von den Empfangssignalen der Empfänger ein binäres Schaltsignal generiert, dessen Schaltzustände angeben, ob sich ein Objekt im Schutzfeld befindet oder nicht.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Zweites Ausführungsbeispiel des erfindungsgemäßen optischen Sensors.
- Figur 3:: Ausführungsbeispiel der erfindungsgemäßen Sensoranordnung mit einem Flächendistanzsensor und einem Ausrichtelement
a) vor Durchführung einer Justage.
b) nach Durchführung einer Justage.
- Figur 4:: Ausführungsbeispiel der erfindungsgemäßen Sensoranordnung mit einem Flächendistanzsensor und drei Ausrichtelementen.
- Figur 5:: Ausführungsbeispiel eines Ausrichtelements.
- Figur 6a, 6b: Signalverläufe bei der Abtastung des Ausrichtelements gemäß Figur 5 in unterschiedlichen Höhenlagen.

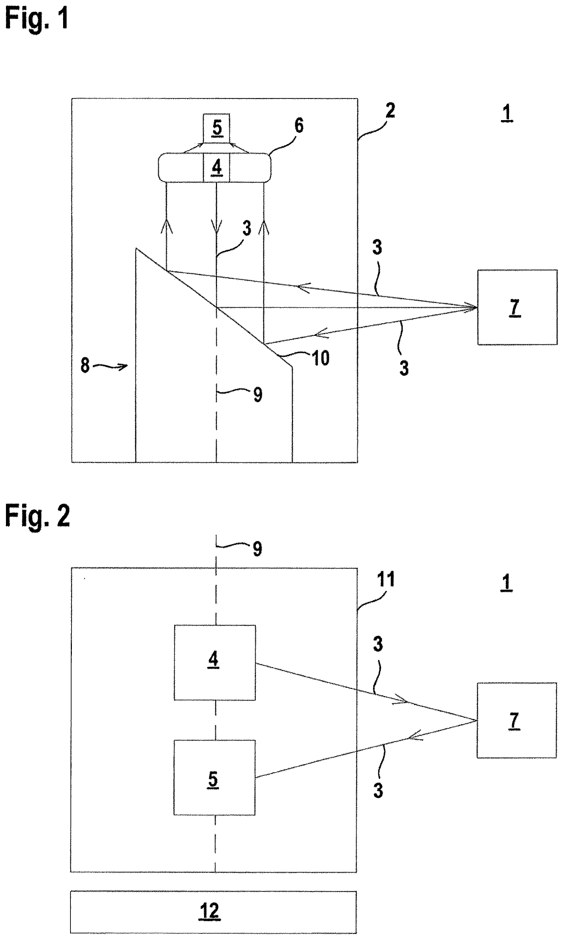

Figur 1 zeigt ein erstes Ausführungsbeispiel eines Flächendistanzsensors 1, das heißt eines scannenden Distanzsensors, dessen Komponenten in einem Gehäuse 2 untergebracht sind. Zur Durchführung von Distanzmessungen weist der optische Sensor einen Lichtstrahlen 3 emittierenden Sender 4 und einen Lichtstrahlen 3 empfangenden Empfänger 5 mit einer vorgeordneten Empfangsoptik 6 auf. Der Sender 4 emittiert Lichtstrahlen 3 in Form von Lichtpulsen. Wie Figur 2 zeigt, werden die Lichtstrahlen 3 an einem detektierenden Objekt 7 reflektiert, wobei die entsprechende Lichtlaufzeit der Lichtpulse zum Objekt 7 und zurück zum Flächendistanzsensor 1 für die Distanzbestimmungen ausgewertet werden.

Der Sender 4 und der Empfänger 5 sind stationär im Gehäuse 2 angeordnet. Mit dem Flächendistanzsensor 1 erfolgt eine Objektdetektion in einem flächigen Erfassungsbereich dadurch, dass die Lichtstrahlen 3 mittels einer Ablenkeinheit 8 periodisch abgelenkt werden. Die Ablenkeinheit 8 ist motorisch angetrieben und umfasst einen um eine Drehachse 9 drehbaren Umlenkspiegel 10, an dem die Lichtstrahlen 3 abgelenkt werden. Die vom Objekt 7 zurückreflektierten Lichtstrahlen 3 werden über die Ablenkeinheit 8 zum Empfänger 5 geführt.

Figur 2 zeigt eine Variante des Flächendistanzsensors 1 gemäß Figur 1. In diesem Fall erfolgt die periodische Ablenkung der Lichtstrahlen 3 dadurch, dass der Sender 4 und der Empfänger 5 in einem um eine Drehachse 9 drehbaren Messkopf 11 angeordnet sind, wobei der Messkopf 11 auf einem Sockel 12 drehbar gelagert ist.

Mit den Flächendistanzsensoren 1 gemäß den Figuren 1 und 2 erfolgt besonders vorteilhaft eine Schutzfeldüberwachung. Hierzu ist ein flächiges Schutzfeld innerhalb des Überwachungsbereichs vorgegeben. Der Flächendistanzsensor 1 generiert dann als Objektfeststellungssignal ein binäres Schaltsignal, dessen Schaltzustände angeben, ob sich ein Objekt 7 innerhalb des Schutzfeldes befindet oder nicht.

Für den Einsatz im Bereich der Sicherheitstechnik sind die Flächendistanzsensoren 1 gemäß den Figuren 1 und 2 als Sicherheitssensoren ausgebildet und weisen einen fehlersicheren Aufbau auf, der beispielsweise durch eine redundante Auswerteeinheit in Form zweier sich zyklisch gegenseitig überwachender Prozessoren realisiert werden kann. Weiterhin ist ein fehlersicherer, insbesondere zweikanaliger Ausgang zur Ausgabe des Objektfeststellungssignals vorgesehen.

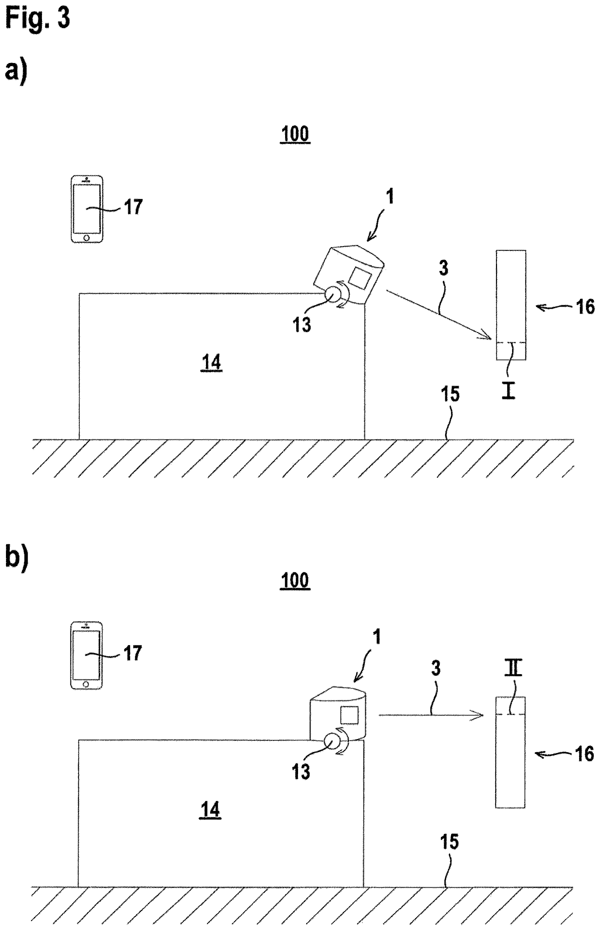

Die Figuren 3a, 3b zeigen ein erstes Ausführungsbeispiel der erfindungsgemäßen Sensoranordnung 100 mit einem Flächendistanzsensor 1 gemäß den Figuren 1 bzw. 2, wobei der Flächendistanzsensor 1 mittels einer Gelenkverbindung 13 neigungsverstellbar an einer Maschine 14 angeordnet ist, die auf einem Boden 15 einer Halle aufgestellt ist. Alternativ kann der Flächendistanzsensor 1 auch an einem fahrerlosen Transportsystem (FTS) bzw. einem Automated Guided Vehicle (AGV) angebracht sein. In solchen mobilen Anwendungen ist die horizontale Ausrichtung der Abtastebene in Solllage durch ihre Nähe zum Boden 15 besonders wichtig und die erfindungsgemäße Ausrichthilfe 16 besonders vorteilhaft.

Die hier dargestellte Gelenkverbindung 13 stellt eine mögliche Ausführungsform einer Halterungs- bzw. Justagevorrichtung für den Flächendistanzsensor 1 dar, die ein Modifizieren der Abtastebene erlaubt.

Zur Justage der Flächendistanzsensoren 1 weist die Sensoranordnung 100 ein Ausrichtelement 16 auf. Das Ausrichtelement 16 ist an einer nicht dargestellten Halterung so gelagert, dass dieses senkrecht zum Boden 15 orientiert ist, d.h. die Höhenrichtung des Ausrichtelements 16 verläuft in vertikaler Richtung.

Die in einer Abtastebene periodisch geführten Lichtstrahlen 3 überstreichen die Oberfläche des Ausrichtelements 16, das ein Kontrastmuster aufweist, welches in Höhenrichtung eine eindeutige Variation aufweist. Aufgrund des Kontrastmusters ist das Ausrichtelement 16 im Flächendistanzsensor 1 eindeutig identifizierbar.

Figur 3 a zeigt den Flächendistanzsensor 1 in einer dejustierten Lage, in der die Abtastebene schräg nach unten geneigt ist. In dieser Lage wird mit den Lichtstrahlen 3 des Flächendistanzsensors 1 das Ausrichtelement 16 in einer ersten Höhenlage I abgetastet. Figur 3 zeigt den Flächendistanzsensor 1 in nach erfolgter Justierung in seiner Solllage, in der die Abtastebene in einer horizontalen Ebene verläuft. In dieser Solllage wird mit den Lichtstrahlen 3 des Flächendistanzsensors 1 das Ausrichtelement 16 in einer zweiten Höhenlage II abgetastet.

Bei der Abtastung des Ausrichtelements 16 mit dem Flächendistanzsensor 1 wird einerseits die Distanz des Ausrichtelements 16 zum Flächendistanzsensor 1 erfasst und andererseits der Amplitudenverlauf der Empfangssignale ermittelt, wodurch das Kontrastmuster in der jeweiligen Höhenlage erfasst wird.

Da das Kontrastmuster in Höhenrichtung eine eindeutige Variation aufweist, wird bei Abtastung jeder Höhenlage des Ausrichtelements 16 immer ein anderer Amplitudenverlauf des Empfangssignals erhalten, der zusammen mit dem Distanzwert ein eindeutiges Maß für die Lage der Abtastebene relativ zum Ausrichtelement 16 liefert. Somit wird quantitativ die Abweichung der Lage des Flächendistanzsensors 1 zur Solllage bestimmt, was auf einer Anzeigeeinheit visualisiert wird. Damit kann ein Benutzer den Flächendistanzsensor 1 mittels der Gelenkverbindung 13 entsprechend verstellen, wobei im vorliegenden Ausführungsbeispiel mit der Gelenkverbindung 13 eine ein dimensionale Schwenkbewegung in einer vertikalen Ebene durchgeführt wird.

Die Anzeigeneinheit kann im Flächendistanzsensor 1 integriert sein. Alternativ kann die Anzeigeeinheit in einer externen Einheit vorgesehen sein. Bei dem Ausführungsbeispiel gemäß der Figuren 3a, 3b ist die externe Einheit ein Smartphone 17, dessen Display als Anzeigeeinheit genutzt wird. Das Smartphone 17 ist mit dem Flächendistanzsensor 1 über eine Datenverbindung, insbesondere eine Funkstrecke, verbunden.

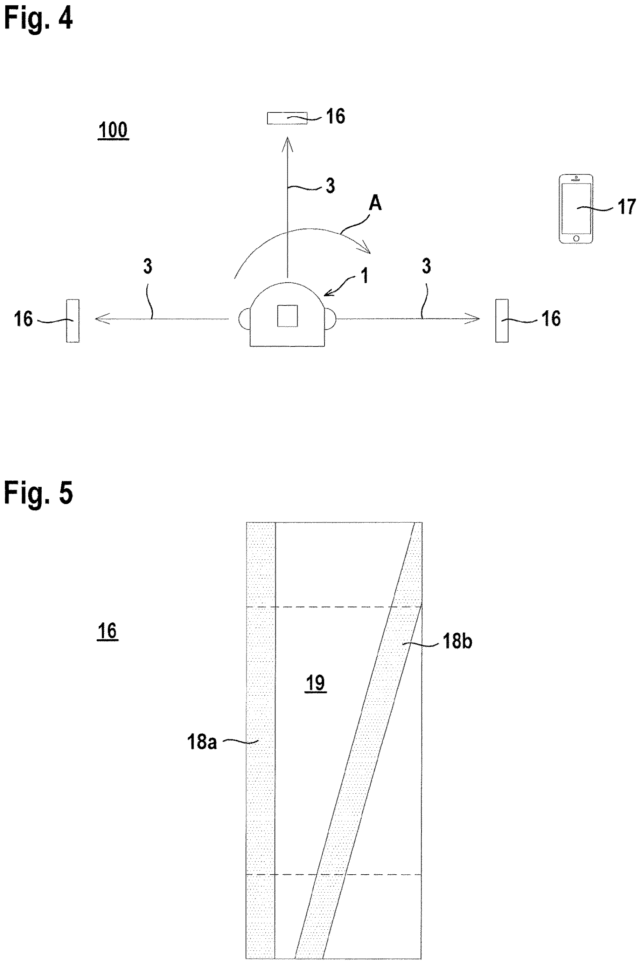

Figur 4 zeigt eine Erweiterung der Ausführungsform der Figuren 3a, 3b, wobei die Sensoranordnung 100 in einer Draufsicht von oben dargestellt ist.

Bei der Ausführungsform gemäß Figur 4 sind drei vorzugsweise identische Ausrichtelemente 16 vorgesehen, die in Abtastrichtung A der Lichtstrahlen 3 des Flächendistanzsensors 1 in Abstand hintereinander angeordnet sind. Dabei spannen die Ausrichtelemente 16 eine horizontale Ebene auf, die die Solllage für die Abtastebene des Flächendistanzsensors 1 definiert.

In diesem Fall werden in der Auswerteeinheit die bei der Abtastung der Ausrichtelemente 16 generierten Empfangssignale ausgewertet.

Bei dieser Anordnung werden durch die Erfassung der Ausrichtelemente 16 Verkippungen der Abtastebene in Höhenrichtung der Ausrichtelemente 16 und bezüglich einer von den Ausrichtelementen 16 aufgespannten Ebene festgestellt. Zur Justage kann dann der Flächendistanzsensor 1 an der Gelenkverbindung in zwei Raumrichtungen verstellt werden.

Die Verkippungen werden wieder an der Anzeigeneinheit des Smartphones 17 angezeigt, so dass ein Benutzer die Fehlstellung des Flächendistanzsensors 1 korrigieren kann.

Figur 5 zeigt eine konkrete Ausgestaltung eines Kontrastmusters des Ausrichtelements 16 der Figuren 3a, 3b, 4. Wie aus Figur 5 ersichtlich, ist das Ausrichtelement 16 rechteckförmig.

Das Kontrastmuster ist dadurch gebildet, dass zwei in Form von Folien gebildeten, rechteckförmigen retroreflektierenden Streifen 18a, 18b auf einen dunklen, diffus reflektierenden Hintergrund 19 an der dem Flächendistanzsensor 1 zugewandten Oberfläche des Ausrichtelements 16 aufgebracht, insbesondere aufgeklebt sind.

Der erste retroreflektierende Streifen 18a verläuft an einem seitlichen Rand des Ausrichtelements 16 in vertikaler Richtung und markiert den Anfang des Ausrichtelements 16. Der zweite retroreflektierende Streifen 18b verläuft in einem Neigungswinkel geneigt zum ersten retroreflektierenden Streifen 18a. Beide retroreflektierende Streifen 18a, 18b erstrecken sich über die gesamte Höhe des Ausrichtelements 16. Mit den so ausgebildeten retroreflektierenden Streifen 18a, 18b ergibt sich ein in Höhenrichtung des Ausrichtelements 16 eindeutig variierendes Kontrastmuster. Werden die Lichtstrahlen 3 über die retroreflektierenden Streifen 18a, 18b geführt ergeben sich Amplituden bzw. Signalstärken S Maximalwerte der Amplituden S der Empfangssignale, die erheblich größer sind als die Amplitudenwerte, wenn die Lichtstrahlen 3 über den Hintergrund 19 des Ausrichtelements 16 geführt sind.

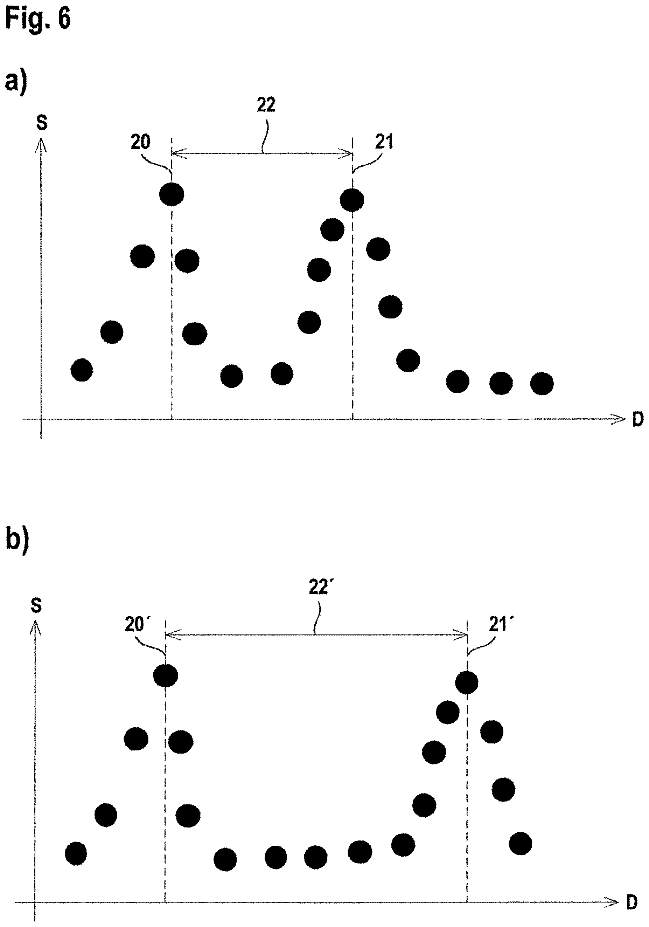

Dies ist in den Figuren 6a, 6b veranschaulicht. Die Figuren 6a, 6b zeigen die Messwerte der Amplituden S der Empfangssignale abhängig von der Ablenkposition D der Lichtstrahlen 3.

Figur 6a zeigt den Amplitudenverlauf der Empfangssignale, wenn das Kontrastmuster in der Höhenlage I bei dejustiertem Flächendistanzsensor 1 abgetastet wird, wie in Figur 3a dargestellt.

Der Amplitudenverlauf weist zwei Maxima 20, 21 auf, die durch die Abtastung der retroreflektierenden Streifen 18a, 18b entstehen. Da in der Höhenlage I die retroreflektierenden Streifen 18a, 18b dicht beieinander liegen, ist der Abstand 22 zwischen den Maxima 20, 21 klein.

Figur 6a zeigt den Amplitudenverlauf der Empfangssignale, wenn das Kontrastmuster in der Höhenlage II bei justierten Flächendistanzsensoren 1 abgetastet wird, wie in Figur 3b dargestellt.

Der Amplitudenverlauf weist wieder zwei Maxima 20', 21' auf, die durch die Abtastung der retroreflektierenden Streifen 18a, 18b entstehen. Da in der Höhenlage II die retroreflektierenden Streifen 18a, 18b weiter auseinander liegen, ist der Abstand 22' zwischen den Maxima 20', 21' größer.

Der Amplitudenverlauf der Empfangssignale zusammen mit der ermittelten Distanz der Ausrichtelemente 16 liefert somit ein eindeutiges Maß für den Grad einer Dejustierung des Flächendistanzsensors 1, so dass mit diesen Messwerten die Justage des Flächendistanzsensors 1 durchgeführt werden kann.

### Bezugszeichenliste

- (1): Flächendistanzsensor
- (2): Gehäuse
- (3): Lichtstrahl
- (4): Sender
- (5): Empfänger
- (6): Empfangsoptik
- (7): Objekt
- (8): Ablenkeinheit
- (9): Drehachse
- (10): Umlenkspiegel
- (11): Messkopf
- (12): Sockel
- (13): Gelenkverbindung
- (14): Maschine
- (15): Boden
- (16): Ausrichtelement
- (17): Smartphone
- (18a, 18b): retroreflektierender Streifen
- (19): Hintergrund
- (20): Maximum
- (20'): Maximum
- (21): Maximum
- (21'): Maximum
- (22): Abstand
- (22'): Abstand
- (100): Sensoranordnung

- (A): Abtastrichtung
- (D): Ablenkposition
- (S): Amplitude

- (I): Höhenlage
- (II): Höhenlage

## Patentansprüche

1. Sensoranordnung (100) mit einem Flächendistanzsensor (1) mit einem Lichtstrahlen (3) emittierenden Sender (4) und einem Lichtstrahlen (3) empfangenden Empfänger (5), wobei die Lichtstrahlen (3) periodisch in einer Abtastebene geführt sind, und mit einer Auswerteeinheit in welcher abhängig von Empfangssignalen des Empfängers (5) Distanzen von Objekten (7) bestimmt werden, **dadurch gekennzeichnet, dass** wenigstens ein Ausrichtelement (16) vorhanden ist, das geneigt zur Abtastebene angeordnet ist, so dass es in seiner Höhenrichtung über die Abtastebene hervorsteht, wobei das Ausrichtelement (16) ein Kontrastmuster aufweist, welches sich über die Höhe des Ausrichtelements (16) in eindeutiger Weise ändert, und dass in der Auswerteeinheit anhand der Empfangssignale des Empfängers (5) die Distanz des Ausrichtelements (16) und der Amplitudenverlauf der Empfangssignale bei der Abtastung des Kontrastmusters mit den Lichtstrahlen (3) als Maß für die Orientierung der Abtastebene ausgewertet wird.

2. Sensoranordnung (100) nach Anspruch 1, **dadurch gekennzeichnet, dass** durch die Erfassung des Ausrichtelements (16) Verkippungen der Abtastebene in Höhenrichtung der Ausrichtelemente (16) festgestellt werden.

3. Sensoranordnung (100) nach einem der Ansprüche 1 oder 2, **dadurch gekennzeichnet, dass** mehrere Ausrichtelemente (16) vorhanden sind, die in Abtastrichtung (A) der Lichtstrahlen (3) in Abstand zueinander angeordnet sind.

4. Sensoranordnung (100) nach Anspruch 3, **dadurch gekennzeichnet, dass** in der Auswerteeinheit die bei der Abtastung der Ausrichtelemente (16) generierten Empfangssignale ausgewertet werden.

5. Sensoranordnung (100) nach einem der Ansprüche 3 oder 4, **dadurch gekennzeichnet, dass** durch die Erfassung der Ausrichtelemente (16) Verkippungen der Abtastebene in Höhenrichtung der Ausrichtelemente (16) und bezüglich einer von den Ausrichtelementen (16) aufgespannten Ebene festgestellt werden.

6. Sensoranordnung (100) nach Anspruch 5, **dadurch gekennzeichnet, dass** die Ausrichtelemente (16) eine horizontale Sollebene aufspannen.

7. Sensoranordnung (100) nach Anspruch 6, **dadurch gekennzeichnet, dass** die Ausrichtelemente (16) senkrecht zur horizontalen Sollebene orientiert sind.

8. Sensoranordnung (100) nach einem der Ansprüche 3 bis 7, **dadurch gekennzeichnet, dass** die Ausrichtelemente (16) identisch ausgebildet sind.

9. Sensoranordnung (100) nach einem der Ansprüche 1 bis 8, **dadurch gekennzeichnet, dass** eine Anzeigeeinheit vorhanden ist, die dem Flächendistanzsensor (1) zugeordnet ist, wobei mit der Anzeigeeinheit die Ausrichtung der Abtastebene relativ zu dem oder den Ausrichtelementen (16) angezeigt wird.

10. Sensoranordnung (100) nach Anspruch 9, **dadurch gekennzeichnet, dass** die Anzeigeneinheit im Flächendistanzsensoren (1) integriert ist.

11. Sensoranordnung (100) nach einem der Ansprüche 9 oder 10, **dadurch gekennzeichnet, dass** mittels der Anzeigeeinheit Verkippungen der Flächendistanzsensoren (1) bezüglich einer Solllage anzeigt werden.

12. Sensoranordnung (100) nach einem der Ansprüche 1 bis 11, **dadurch gekennzeichnet, dass** das oder jedes Ausrichtelement (16) in der Auswerteeinheit anhand dessen Kontrastmusters identifizierbar ist.

13. Sensoranordnung (100) nach einem der Ansprüche 1 bis 12, **dadurch gekennzeichnet, dass** das Kontrastmuster des oder jedes Ausrichtelements (16) retroreflektierende Elemente auf einem diffus reflektierenden Hintergrund (19) aufweist.

14. Sensoranordnung (100) nach Anspruch 13, **dadurch gekennzeichnet, dass** ein dunkler Hintergrund (19) vorgesehen ist.

15. Sensoranordnung (100) nach einem der Ansprüche 13 oder 14, **dadurch gekennzeichnet, dass** das Kontrastmuster zwei sich über die gesamte Höhe des Ausrichtelements (16) erstreckende retroreflektierende Streifen (18a, 18b) aufweist, die in einem Neigungswinkel zueinander verlaufen.

16. Sensoranordnung (100) nach Anspruch 15, **dadurch gekennzeichnet, dass** ein retroreflektierender Streifen (18a, 18b) an einem seitlichen Rand des Ausrichtelements (16) angeordnet ist.

17. Sensoranordnung (100) nach einem der Ansprüche 15 oder 16, **dadurch gekennzeichnet, dass** die retroreflektierenden Streifen (18a, 18b) rechteckförmig sind.

18. Sensoranordnung (100) nach einem der Ansprüche 13 bis 17, **dadurch gekennzeichnet, dass** die retroreflektierenden Elemente aus retroreflektierenden Folien bestehen.

19. Sensoranordnung (100) nach einem der Ansprüche 13 bis 18, **dadurch gekennzeichnet, dass** das Ausrichtelement aus einer dünnen Folie oder einem Flächenelement in Form eines Kontrastmusters mit oder ohne Hintergrundflächen besteht, die auf einer im Raum befindlichen senkrechten Fläche angebracht wird.

20. Sensoranordnung (100) nach einem der Ansprüche 1 bis 19, **dadurch gekennzeichnet, dass** der Flächendistanzsensor (1) ein Sicherheitssensor ist.

21. Verfahren zum Betrieb einer Sensoranordnung (100) mit einem Flächendistanzsensor (1) mit einem Lichtstrahlen (3) emittierenden Sender (4) und einem Lichtstrahlen (3) empfangenden Empfänger (5), wobei die Lichtstrahlen (3) periodisch in einer Abtastebene geführt sind, und mit einer Auswerteeinheit in welcher abhängig von Empfangssignalen des Empfängers (5) Distanzen von Objekten (7) bestimmt werden, **dadurch gekennzeichnet, dass** wenigstens ein Ausrichtelement (16) vorhanden ist, das geneigt zur Abtastebene angeordnet ist, so dass es in seiner Höhenrichtung über die Abtastebene hervorsteht, wobei das Ausrichtelement (16) ein Kontrastmuster aufweist, welches sich über die Höhe des Ausrichtelements (16) in eindeutiger Weise ändert und dass in der Auswerteeinheit anhand der Empfangssignale des Empfängers (5) die Distanz des Ausrichtelements (16) und der Amplitudenverlauf der Empfangssignale bei der Abtastung des Kontrastmusters mit den Lichtstrahlen (3) als Maß für die Orientierung der Abtastebene ausgewertet wird.
